Europäisches Patentamt

European Patent Office

Office européen des brevets

(11) Publication number: **0 325 899 B1**

# EUROPEAN PATENT SPECIFICATION

(45) Date of publication of patent specification: **07.10.92**   (51) Int. Cl.⁵: **B60G  7/02**, B60G 3/26

(21) Application number: **88830538.0**

(22) Date of filing: **13.12.88**

(54) **Rear suspension for motor vehicles with independent wheels.**

(30) Priority: **30.12.87 IT 6814987**

(43) Date of publication of application:
**02.08.89 Bulletin  89/31**

(45) Publication of the grant of the patent:
**07.10.92 Bulletin  92/41**

(84) Designated Contracting States:
**DE ES FR GB SE**

(56) References cited:
EP-A- 0 052 154      EP-A- 0 071 250
EP-A- 0 136 563      EP-A- 0 141 093
EP-A- 0 193 847      US-A- 2 154 569

**PATENT ABSTRACTS OF JAPAN, vol. 11, no.
356 (M-644)[2803], 20th November 1987, page
75 M 644; & JP-A 62 134 310 (HONDA MOTOR
CO., LTD) 17-06-1987**

**A.T.Z. AUTOMOBILTECHNISCHE ZEITSCH-
RIFT, vol. 85, no. 5 May 1985, pages
205,206,209,210, Schwäbisch Gmünd, DE; J.H.
SORSCHE: "Gesamtkonzept und Fahrgestel-
laggregate der neuen Mercedes-Benz Typen
190/190 E"**

(73) Proprietor: **FIAT AUTO S.p.A.
Corso Giovanni Agnelli 200
I-10135 Torino(IT)**

(72) Inventor: **Camuffo, Sergio
Via Boston, 22/8
I-10137 Torino(IT)**

(74) Representative: **Notaro, Giancarlo et al
c/o Jacobacci-Casetta & Perani S.p.A. Via
Alfieri, 17
I-10121 Torino(IT)**

Rank Xerox (UK) Business Services

## Description

The present invention relates to rear suspensions for motor vehicles, of the type indicated in the pre-characterising portion of Claim 1. A suspension of this type is known from EP-A-0 052 154.

The object of the present invention is to provide a rear suspension which is useable both for driven wheels and for non-driven wheels, which may be assembled on the motor vehicle structure by simple operations and possibly by robots, and which finally ensures the stability and road-holding of the motor vehicle in any conditions of travel, as well as the comfort of the passengers. This object is not achieved by the above mentioned known suspension.

In order to achieve this object, the invention provides a rear suspension of the type indicated above, having the further features set forth in the characterising portion of Claim 1.

The suspension according to the invention may be assembled entirely on the auxiliary frame and then mounted together with it on the motor vehicle structure in a single operation. The aforementioned characteristics indicated above of the suspension according to the invention also enable it to be used both for driven rear wheels and for non-driven rear wheels. Finally, the particular mechanism adopted is such that, when the motor vehicle is travelling around bends, the wheel support rotates slightly in the horizontal plane as a result of shaking and loads, and this corresponds to a slight steering of the rear wheels, such as to achieve the optimum stability for the motor vehicle in the bend.

It is to be noted that the use of an auxiliary support frame for a suspension is known from EP-A-0 193 847. This document however does not anticipate the above mentioned further features which are set forth in Claim 1.

Further characteristics and advantages of the present invention will become apparent from the description which follows with reference to the appended drawings, provided purely by way of non-limiting example, in which:

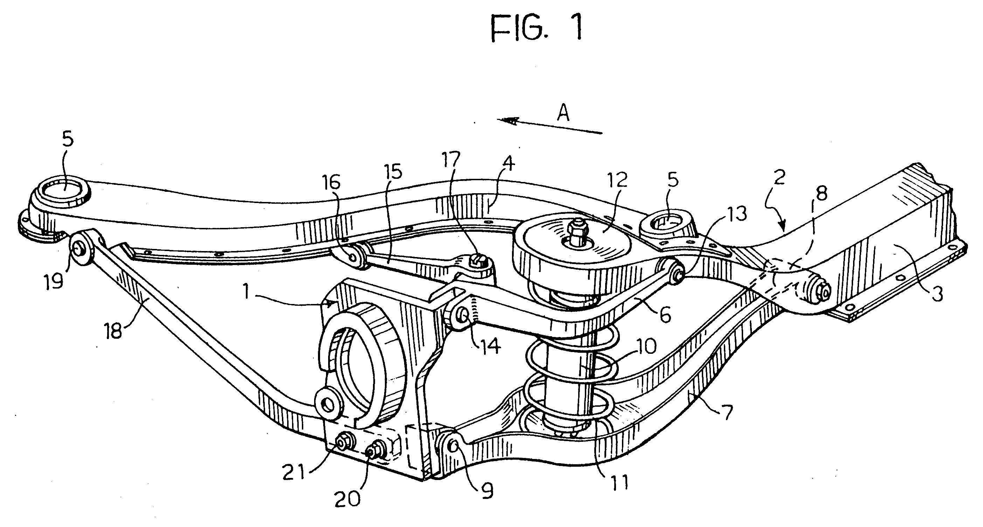

Figure 1 is a schematic perspective view of the suspension according to the invention.

Figure 1 illustrates solely the left-hand side of the suspension (with reference to the direction of forward movement of the motor vehicle, indicated by the arrow A in the drawing), the right-hand side being symmetrical with that illustrated.

The support for the left-hand rear wheel of the motor vehicle is indicated 1 and is connected by a plurality of articulated arms to an auxiliary frame 2 intended to be fixed to the motor vehicle body. The frame 2 has a pressed-sheet-metal structure including a cross member 3 which, in the embodiment illustrated, has an essentially Ω-shaped section, and a longitudinal member 4 extending forwardly from each end of the cross member 3 and also having an Ω-shaped section. The auxiliary frame 2 is intended to be fixed to the motor vehicle body in correspondence with four attachments 5 with the interposition of rubber shock-absorbing supports. The wheel support 1 is connected to the frame 2 by means of an upper transverse arm 6 and a lower transverse arm 7 constituting a transverse articulated quadrilateral. The lower transverse arm 7 is constituted by a pressed-sheet-metal element and is articulated at 8 to the cross member 3 with the interposition of a bush of elastomeric material, the articulation pin being disposed in the cavity of the cross member 3. The arm 7 is connected at 9 to the support 1. The resilient-shock-absorbing unit of the suspension (which is constituted by a shock-absorbing cylinder 10 and a helical spring 11 in the embodiment illustrated) is interposed between the element 7 and the abutment 12 defined by the end of the cross member 3. The upper transverse arm 6 has an angled profile so as to avoid interference with the unit 10, 11. The arm 6 is articulated at 13 to the cross member 3 and at 14 to the support 1. An auxiliary upper arm 15 is also provided and has one end articulated at 16 to the longitudinal member 4 of the auxiliary frame 2 and one end articulated at 17 to the upper transverse arm 6, in the manner illustrated in the drawing. Finally, a longitudinal arm 18 is provided which has one end articulated at 19 to the front end of the element 4 in the manner illustrated. The opposite end of the longitudinal arm 18 is connected to the wheel support 1 by means of a ball joint 20. A second point of connection 21 is also provided which includes a bush that is flexible in an axial sense and is rigid in a radial sense. The connection 21 is provided with an adjustment device (for example, by means of a threaded coupling) for adjusting the position of the longitudinal arm 18 relative to the support 1 in the transverse direction. It is thus possible to adjust the convergence of the wheels. The adjustment of the track, on the other hand, may be effected by a transverse movement of the lower arm 7, for example, by the prearrangement of an adjustment device in correspondence with the articulation 8.

The particular mechanism explained above is such that vertical movements of the wheel support 1 generated during movement of the motor vehicle around bends cause rotation of the support 1 in a horizontal plane and consequent steering of the rear wheel so as to improve the stability of the motor vehicle in the bend.

## Claims

1. A rear suspension for motor vehicles, of the type with independent wheels, in which the support (1) for each wheel is connected to the structure of the motor vehicle by means of a plurality of articulated arms comprising : an upper transverse arm (6) and a lower transverse arm (7) defining a transverse articulated quadrilateral, the lower transverse arm (7) supporting the resilient shock absorbing unit (10,11) of the suspension; an inclined auxiliary arm (15); and a longitudinal arm (18), **characterised in that**

- the ends of the articulated arms opposite those connected to the wheel support (1) are connected to an auxiliary frame (2) comprising a cross member (3) and two longitudinal members (4), said auxiliary frame being fixed to the structure of the vehicle,
- the inclined auxiliary arm is articulated at one end to the auxiliary frame longitudinal member (4) and at the other end to the upper transverse arm,
- the longitudinal arm (18) is connected to the wheel support by means of a ball joint and is also provided, at a point spaced from the joint, with means for adjusting the relative position of the wheel support (1) with respect to the longitudinal arm (18) in the direction transverse the motor vehicle.

2. A suspension according to Claim 1, characterised in that the articulation of the lower transverse arm (7) to the auxiliary frame (2) is provided with means for adjusting the position of the lower arm (7) relative to the auxiliary frame (2) in the transverse direction.

3. A rear suspension according to Claim 1, characterised in that the lower arm (7) is constituted by a pressed-sheet-metal element, the resilient-shock-absorbing unit being interposed between the transverse arm (7) and an abutment (12) forming part of the auxiliary frame (2).

4. A suspension according to Claim 1, characterised in that the cross member (3) and the longitudinal members (4) of the auxiliary frame have an $\Omega$-section.

**Patentansprüche**

1. Hinterachsaufhängung für Kraftfahrzeuge mit einzeln aufgehängten Rädern, wobei der Träger (1) für jedes Rad mit der Struktur des Kraftfahrzeuges über mehrere gelenkig gelagerte Arme verbunden ist, die einen oberen Querarm (6) und einen unteren Querarm (7) umfassen, welche ein quer angeordnetes Gelenkrechteck bilden, wobei der untere Querarm (7) die elastische Stoßdämpfereinheit (10, 11) der Aufhängung trägt, ferner einen geneigten Hilfsarm (15) und einen Längsarm (18), dadurch **gekennzeichnet,**

- daß die Enden der gelenkig gelagerten Arme, die den mit der Kraftfahrzeugstruktur (1) verbundenen Enden abgewandt sind, mit einem Hilfsrahmen (2) verbunden sind, welcher einen Querträger (3) und zwei Längsträger (4) umfaßt, wobei der Hilfsträger an der Kraftfahrzeugstruktur befestigt ist;
- daß der geneigte Hilfsarm mit einem Ende am Längsträger (4) des Hilfsrahmens und mit dem anderen Ende am oberen Querarm gelenkig gelagert ist;
- daß der Längsarm (18) mit dem Radträger über ein Kugelgelenk verbunden und an einer vom Kugelgelenk beabstandeten Stelle mit Mitteln versehen ist, um die Relativposition des Radträgers (1) gegenüber dem Längsarm (18) in Querrichtung des Kraftfahrzeuges zu justieren.

2. Achsaufhängung nach Anspruch 1, dadurch **gekennzeichnet,** daß die gelenkige Lagerung des unteren Querarmes (7) am Hilfsrahmen (2) mit Mitteln zum Justieren der Position des unteren Armes (7) relativ zum Hilfsrahmen (2) in Querrichtung versehen ist.

3. Hinterachsaufhängung nach Anspruch 1, dadurch **gekennzeichnet,** daß der untere Arm (7) durch ein Preßmetallblech-Element gebildet ist, wobei die elastische Stoßdämpfereinheit zwischen dem Querarm (7) und einem Gegenlager (12) angeordnet ist, welches einen Teil des Hilfsrahmens (2) bildet.

4. Achsaufhängung nach Anspruch 1, dadurch **gekennzeichnet,** daß der Querträger (3) und der Längsträger (4) des Hilfsrahmens jeweils einen $\Omega$-förmigen Querschnitt haben.

**Revendications**

1. Suspension arrière pour véhicules automobiles, du type à roues indépendantes, dans lequel le support (1) de chaque roue est relié à la structure du véhicule automobile à l'aide d'une pluralité de bras articulés qui comprend : un bras transversal supérieur (6) et un bras transversal inférieur (7) définissant un quadrilatère articulé transversal, le bras transversal inférieur (7) supportant l'unité élastique et amortisseuse (10, 11) de la suspension ; un bras auxiliaire incliné (15) et un bras longitudinal (18), caractérisée en ce que

- les extrémités des bras articulés qui sont à l'opposé de celles reliées au support de roue (1) sont reliées à un châssis auxiliaire (2) comprenant une traverse (3) et deux éléments longitudinaux (4), ledit châssis auxiliaire étant fixé à la structure du véhicule,
- le bras auxiliaire incliné est articulé à une première extrémité sur l'élément longitudinal (4) du châssis auxiliaire et à l'autre extrémité sur le bras transversal supérieur,
- le bras longitudinal (18) est relié au support de roue au moyen d'un joint à rotule et il est aussi muni, en un point espacé du joint, de moyens permettant de régler la position relative du support de roue (1) par rapport au bras longitudinal (18) dans la direction transversale du véhicule automobile.

2. Suspension selon la revendication 1, caractérisé en ce que l'articulation du bras transversal inférieur (7) sur le châssis auxiliaire (2) est équipée de moyens servant à régler la position du bras inférieur (7) par rapport au châssis auxiliaire (2) dans la direction transversale.

3. Suspension auxiliaire selon la revendication 1, caractérisée en ce que le bras inférieur (7) est constitué par un élément en tôle emboutie, l'unité élastique et amortisseuse étant interposée entre le bras transversal (7) et une butée (12) qui fait partie du châssis auxiliaire (2).

4. Suspension selon la revendication 1, caractérisée en ce que la traverse (3) et les éléments longitudinaux (4) du châssis auxilaire ont une section en $\Omega$.

# FIG. 1

EP 0 325 899 B1